# EUROPEAN PATENT SPECIFICATION

(11) **EP 0 346 933 B1**
(45) Date of publication and mention of the grant of the patent: **02.08.1995**
(21) Application number: 89111008.2
(22) Date of filing: 16.06.1989
(51) Int. Cl.: G01N 27/416

(54) **Use of electrically conductive water-in-oil microemulsions based on perfluorinated compounds as catholytes in electrochemical processes**
Verwendung von elektrisch leitenden Wasser-in-Öl-Mikroemulsionen, die auf perfluorinierten Bestandteilen basiert sind, als Catholyten in elektrochemischen Verfahren
Utilisation de microémulsions d'eau dans l'huile électriquement conductrice, basées sur des composés perfluorés comme catholyte dans des processus électrochimiques

(30) Priority: 17.06.1988 IT 2100488
(43) Date of publication of application: 20.12.1989
(73) Proprietor: AUSIMONT S.p.A., I-20100 Milano (IT)
(72) Inventor: Chittofrati, Alba, Dr., I-20133 Milan (IT); Tentorio, Angelo, Dr., I-28100 Novara (IT); Visca, Mario, Dr., I-15100 Alessandria (IT)
(74) Representative: Barz, Peter, Dr.

(56) References cited:
- EP-A- 0 250 766
- EP-A- 0 280 312
- EP-A- 0 315 078
- EP-A- 0 315 841
- FR-A- 2 256 152
- WORLD PATENTS INDEX LATEST Derwent Publications Ltd., London, GB, AN 85-084003 ; & JP-A-60 034 730

## Description

The present invention relates to the use of perfluorinated water-in-oil (w/o) microemulsions as catholytes in electrolytic processes. In particular, the perfluorinated oils are preferably of the perfluoropolyether type.

There is a need of having available electrochemical processes in which it is possible to obtain a high current density with the minimum cell voltage. Said need can be satisfied, for example, by reducing the hydrogen discharge overvoltage with the aid of catalyzing electrodes as cathodes.

A possible alternative thereto is a cathodic reaction which - with the anodic reaction being the same - occurs at a lower value of the reversible potential difference.

It is well known from electrochemical processes, in particular from voltametry, that a gas-saturated (for example O₂-saturated) saline solution exhibits certain limiting values of the reduction current of said gas as a function of the temperature and of the angular revolving speed (ω) of the working electrode, which are determined by the (low) solubility of the gas in the electrolyte. Conversely, the H₂ evolution current is only a function of the potential and of the temperature, since the reduction of H⁺ ions to H₂ is substantially independent of diffusion and, therefore, independent of ω.

It has now surprisingly been found that by carring out voltametric processes in the w/o microemulsions described hereinbelow, having an electric conductance of preferably at least 1 milliS.cm⁻¹, the diffusion limiting current density of the gas which is being reduced at the cathode is much higher than the diffusion limiting current density of the same gas in an aqueous (saline) solution, when working under identical conditions as to temperature and rotational speed of the electrode.

A further surprising aspect of the present invention is that - with the current density and the anodic process being the same - the difference between the cathodic potential of a process in a microemulsion (for example the reduction of O₂ to OH⁻) and the cathodic potential of a reference process in an aqueous solution (typically the H₂ evolution) is such that as compared to the electrolysis in aqueous phase the electrolysis in microemulsion allows to save energy.

In certain cases it is possible to observe in the microemulsion a considerable current, due to the reduction of oxygen, at cathode potentials at which no discharge of H⁺ can be observed in the reference solution.

It is apparent that it is necessary to compare - under the same current conditions - the cathodic process of O₂ reduction in microemulsion with the H₂ evolution in aqueous solution, since reduction of O₂ in aqueous solutions can only occur at a low current density, limited by the low solubility of the gas and consequently by the diffusion process.

The obtained results described above are particularly surprising and unforeseeable when bearing in mind that the microemulsions employed according to the present invention are of the w/o type, i.e. microemulsions where oil is the continuous phase and water is the dispersed phase.

Thus, object of the present invention is an electrochemical process wherein a gaseous matter is reduced at the cathode and wherein water-in-oil (w/o) microemulsions having an electric conductance (due to ion transfer) of at least 1 millisiemens.cm⁻¹ are utilized as catholytes.

In particular, microemulsions of water in perfluoropolyethers of perfluorocarbons having an electric conductance of at least 1 millisiemens.cm⁻¹ may be used as catholytes for the cathodic reduction of oxygen.

Microemulsions employable according to the present invention are described in IT-A-20,910 A/86, 19,494 A/87, 19,495 A/87 (w/o and o/w microemulsions of perfluoropolyethers) and 22,421 A/87 (conductive microemulsions) as well as in the corresponding EP-A-250766, 280312 and 315841, the contents of which are incorporated herein.

Whenever used in the present invention, the term microemulsion also includes systems in which the molecular orientation in the interphase leads to the formation of optically an-isotropic systems, characterized by bi-refraction and probably consisting of oriented structures of the liquid crystal type.

The microemulsions used according to the present invention are mixtures which macroscopically consist of only one limpid or opalescent phase, which is indefinitely stable in the operative temperature range. Said mixtures preferably comprise:
a) an aqueous liquid optionally containing one or more electrolytes (e.g. salts like alkali and alkaline earth metal halides, nitrates, sulfates, phosphates, etc. and the corresponding acids);
b) a fluid containing one or more species of perfluoropolyether structure having perfluoroalkyl and/or functional end groups, with one or more functionalities selected from carboxyl, alcohol, polyoxyalkylene-OH, ester, amide, etc., and preferably hydrophilic functional groups, such as the carboxyl and polyoxyalkylene-OH groups, and particularly carboxylic groups;
c) a fluorinated surfactant preferably comprising (or consisting of) one or more species of perfluoropolyether structure; and/or
d) a hydrogenated (non-fluorinated) C₁₋₁₂, preferably C₁₋₆ alcohol and, optionally, a fluorinated (preferably C₁₋₁₂) alcohol (co-surfactant).

The microemulsions used herein may be optically isotropic or birefractive, are of the water-in-oil (w/o) type and are characterized in that they are conductive, their conductance being at least equal to 1 millisiemens.cm⁻¹.

Since the microemulsions used according to the present invention are of the w/o type, they must contain the (preferred) PFPE or the perfluorocarbon as "continuous phase". Therefore, the PFPE phase should preferably be in excess (as to the volume) with respect to the aqueous phase.

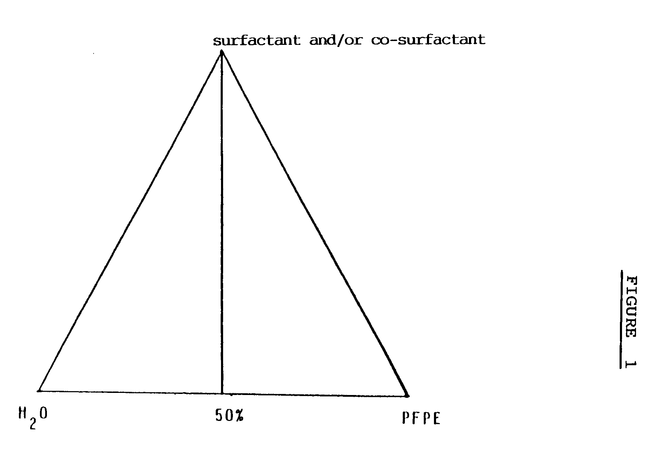

Both the existence of w/o microemulsions and the conductance characteristics thereof are not foreseeable "a priori": therefore, the present microemulsions can preferably be described, in general, as the conductive portion of the single-phase areas which are present in the right half of a water/surfactant system/PFPE ternary diagram as shown in Figure 1.

In Figure 1, the bisecting line of the angle opposite to the water-PFPE base side is characterized by a constant W/PFPE ratio of 1.
In principle, however, it is not possible to exclude the presence of signle-phase conductive areas of the w/o type also with a constant W/PFPE ratio of > 1, due to the impossibility of predicting the existence of such systems.

The fact that a certain water-in-perfluoropolyether microemulsion is within the scope of the present invention can easily be ascertained by a technician skilled in the art by means of a simple measurement of the electric conductance as indicated above.

Perfluoropolyethers (PFPE) suitable for forming the microemulsions employed according to the present invention are:
a) PFPE having an average molecular weight ranging from 500 to 10,000, preferably from 600 to 6,000, having perfluoroalkyl end groups and belonging to one or more of the following classes:
   1) 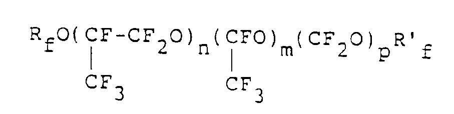 wherein the perfluorooxyalkylene units are distributed statistically and R_{f} and R′_{f}, the same or different from each other, are -CF₃, -C₂-F₅ or -C₃F₇, and m, n, p have such average values as to meet the above requirement as to average molecular weight;
   2) R_{f}O(CF₂CF₂O)ₙ(CF₂O)ₘR′_{f}, wherein the perfluorooxyalkylene units are statistically distributed, R_{f} and R′_{f}, the same or different from each other, are -CF₃ or -C₂F₅, and m and n have such average values as to meet the above requirement as to average molecular weight;
   3) 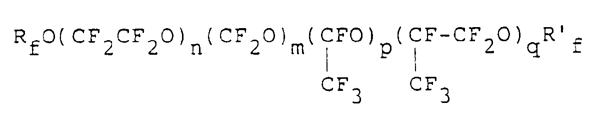 wherein the perfluorooxyalkylene units are statistically distributed, R_{f} and R′_{f}, the same or different from each other, are -CF₃, -C₂F₅ or -C₃-F₇, and m, n, p, q have such average values as to meet the above requirements as to average molecular weight;
   4) 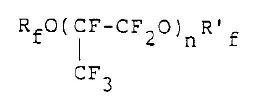 wherein R_{f} and R′_{f}, the same or different from each other, are-C₂F₅ or-C₃F₇ and n has such an average value as to meet the above requirement as to average molecular weight.
   5) R_{f}O(CF₂CF₂O)ₙR′_{f}, wherein R_{f} and R′_{f}, the same or different from each other, are -CF₃ or -C₂F₅, and n has such an average value as to meet the above requirement as to average molecular weight;
   6) R_{f}O(CF₂CF₂CF₂O)ₙR′_{f}, wherein R_{f} and R′_{f}, the same or different from each other, are -CF₃, -C₂F₅ or -C₃F₇ and n has such as average value as to meet the above requirement as to average molecular weight;
   7) PFPE having the structure of class 1 or 3, in which one of the two end groups R_{f} or R′_{f} contains one or two chlorine atoms, such PFPE being described in e.g. IT-A-20,406 A/88 of the applicant.
b) PFPE belonging to the above classes 1) to 7), having an average molecular weight ranging from 1,500 to 10,000, and preferably lower than 6,000, but containing on the average from 0.1 to 4, (e.g. 0.1 to 2) and preferably from 0.3 to 1, non-perfluoroalkyl end groups per polymer chain;
c) Perfluoropolyethers as e.g. described in IT-A-20,346 A/86 in the name of the applicant, having functional groups along the perfluoropolyether chain and end groups of the perfluoroalkyl or functional type.

As examples of non-perfluoroalkyl end groups and of functional groups in the chain there may be mentioned, for example, carboxylate, alcohol, polyoxyalkylene-OH, etc. groups.

The most suitable functional end groups and functional groups in the chain are the hydrophilic ones,and in particular carboxyl groups.

The functional end groups as well as the functional groups in the chain mentioned above can be linked to the perfluoropolyether chain through a -CFX-group in which X is F or CF₃, optionally followed by a linking group consisting of a divalent non-fluorinated radical of the alkylene or arylene type, containing up to 20 carbon atoms, preferably containing 1 to 3 carbon atoms, according to the sequence: perfluoropolyether chain -CFX- non-fluorinated radical-functional group. Specific examples of suitable divalent non-fluorinated radicals are: methylene, ethylene, propylene, butylene, pentylene, hexylene, octylene, phenylene, biphenylene and naphthylene.

It is to be understood that perfluoropolyethers also employable according to the present invention are the ones of classes 1,2 and 3, which may contain peroxy bridges in the chain and have acid end groups, said PFPE being obtainable as crude products of the photo-oxidation process utilized for the synthesis of the above PFPE.

Perfluoropolyethers of class 1) are commercially available under the trade marks Fomblin® Y or Galden®; the ones of class 2) are marketed under the trade mark Fomblin® Z. All of said products are produced by Montedison S.p.A.

Commercially known products of class 4) are the Krytox® (Du Pont) PFPE. The products of class 5) are described in US-A-4,523,039 whereas the products of class 6) are known from EP-A-148,482.

The products of class 3) may be prepared according to US-A-3,665,041.
Other suitable perfluoropolyethers are the ones described by Lagow et al. in US-A-4,523,039 or in J. Am. Chem. Soc. 1985, 107, 1197-1201.

The fluorinated surfactants contained in the present microemulsions may be ionic or non-ionic. Examples of preferred surfactants are:
a) the salts of perfluoroalkylcarboxylic acids having 5 to 11 carbon atoms;
b) the salts of perfluorosulphonic acids having 5 to 11 carbon atoms;
c) the non-ionic surfactants described in EP-A-51526, consisting of a perfluoroalkylene chain and a hydrophilic polyoxyalkylene cap (head);
d) the salts of mono- and di-carboxylic acids derived from perfluoropolyethers;
e) the non-ionic surfactants consisting of a perfluoropolyether chain linked to a polyoxyalkylene chain.

The preferred surfactants are those of the ionic type. Preferred cations in the salts mentioned above are NH₄⁺ and the cations of alkali and alkaline earth metals, e.g. Na, K, Mg and Ca.

Furthermore, the system may contain one or more surfactants belonging to one of the following classes:
- hydrogenated alcohols having 1 to 12 carbon atoms (e.g. methanol, ethanol, propanol, butanol, pentanol, hexanol, octanol and decanol);
- acohols comprising a perfluoropolyether chain,
- partially fluorinated alcohols.

The aqueous liquid may consist of water or of an aqueous solution of inorganic electrolytes (salts, acids or alkalis).

The present w/o microemulsions which are utilizable as catholytes for cathodic gas reduction reactions may also comprise, as continuous oil phase, a perfluorocarbon in addition to or (preferably) instead of a perfluoropolyether, provided that such a microemulsion has a conductance of at least 1 millisiemens.cm⁻¹.

Perfluorocarbon microemulsions are well known in the art - see for example EP-A-51,526, the contents of which are incorporated herein. Preferred perfluorocarbons for use in the present invention contain from 5 to 15, particularly from 6 to 12, carbon atoms.

However, the use of conductive w/o emulsions, in which the oil is a perfluoropolyether, is particularly preferred.

The microemulsions to be used as catholytes may be prepared by mixing the individual components. Said microemulsions can be identified, for example, by measuring the specific conductance --(X) variation of the oil/surfactant/co-surfactant system when varying the composition due to the addition of an aqueous solution.

In practice, to a sample containing a surfactant (and optionally a co-surfactant) in PFPE small amounts of the aqueous phase are added, X being measured after each addition.

Thus, the possible presence of a composition range corresponding to significant X values is ascertained.
Once the composition corresponding to a sufficiently high X value has been identified, the conductive microemulsion can be prepared by simply mixing the individual components taken in any order.

According to the present invention, there are used, as catholytes, w/o microemulsions having a conductivity of at least 1 millisiemens.cm⁻¹ with respect to the electrolytic reactions of any gas that can be reduced at the cathode. In the following examples, oxygen has been used as gas and therefore all the voltametric tests reported hereinafter and the corresponding evaluations concern the cathodic reaction: $\text{O₂+2H₂O+4e⁻ → 4OH⁻,}$
but it is apparent that said evaluations are to be considered as only illustrative.

From the voltametry in aqueous (NH₄)₂SO₄ solution, saturated with O₂, there were obtained the values of the diffusion limiting current of O₂-reduction as a function of temperature and angular rotational speed (ω) of the working Pt electrode, as well as the values of the H₂ evolution current as a function of potential and temperature, since the H⁺reduction is substantially independent of the diffusion and therefore is independent of ω.

Voltametric measurements were carried out by using, as catholyte, the microemulsion (ME), at the same temperatures and at the same ω, determining:
1) O₂-diffusion limiting current density and increase thereof with respect to the diffusion current of the same in an aqueous medium;
2) cathodic potential difference - with the current density being the same - between a cathodic process in microemulsion (typically O₂ reduction) and a reference cathodic process in aqueous solution (typically H₂ evolution).

The limiting current of O₂-reduction indicated in each example is always referred to a cathodic potential which is lower (by 200 mV) than the value at which H₂-evolution in the examined system starts.

In order to measure the current as a function of the applied potential a voltametry was conducted, using as catholytes various ME and as anolyte a concentrated aqueous solution of an inorganic electrolyte.

Voltametric measurements were carried out by means of a multipolarograph Amel® 472, in a 3-electrode cell:
- working electrode of the Pt rotating disc type, having a geometric surface area of 3.14 mm², immersed in the ME;
- Pt counter-electrode, immersed in an aqueous solution of (NH₄)₂SO₄ (3 moles/liter), separated from the ME by an agar-agar septum;
- reference calomel electrode (SCE) immersed in a saline bridge (KCl solution, 3 moles/l) with a Luggin capillary facing the working electrode surface.

All the cathodic potential values reported hereinbelow are referred to the SCE (standard calomel electrode).

In each test, about 60 ml of ME, at the desired temperature, were saturated with moist O₂ at atmospheric pressure.

Starting from the spontaneous potential of the system in the absence of current, a potential sweep-100 mV s⁻¹-was applied to the working cathode, and the circulating current was recorded as a function of the cathodic potential for different rotational speeds of the electrode.

In a concentrated aqueous solution of (NH₄)₂SO₄ (3 moles/l, corresponding to 396 g/l) at a pH of 5.3 and at a specific conductance of 172 milliS.cm⁻¹, H₂-evolution occurred at a cathodic potential of higher than -700 mV (SCE).

In this case the limiting current of O₂-reduction observed at 20°C was 2-3 »A mm⁻² in the absence of stirring, and was 5 »A mm⁻² with ω= 1,500 rpm; at 40°C, 3 »A mm⁻² were obtained with ω= 0, and about 10 »A mm⁻² were obtained with ω = 1,500 rpm.

At 60°C and without electrode rotation, the observed limiting current density was 30 »A mm⁻².
As regards the comparison of the potentials at which the same cathodic current density is observed both in microemulsion and in electrolytic aqueous solution, said comparison was conducted at the same temperature and at a pH of the aqueous electrolyte solution as close as possible to the pH of an aqueous solution of the fluorinated surfactant utilized for preparing the microemulsion.

The examples given below are to be considered as merely illustrative but not limitative of the present invention.

### EXAMPLE 1

In 16 ml of bidistilled water, having a specific conductance of about 1 millisiemens.cm⁻¹, there was dissolved 28.12 g of perfluoropolyether (PFPE) having perfluoroalkyl end groups, belonging to class 1, exhibiting an average molecular weight of 650, in the presence of 57.30 g of ammonium salt of a monocarboxylic acid of perfluoropolyether structure belonging to class 1, having a narrow molecular weight distribution and an equivalent weight of 724, and of 10.86 g of isopropyl alcohol.

The microemulsion (ME) thus obtained had a specific conductance of 10.56 millisiemens.cm⁻¹ and contained 14.3% by weight of dispersed aqueous phase.

From the voltametric diagrams obtained with this ME it is possible to calculate, at a temperature of 20°C, a limiting current of O₂-reduction of 85 »A mm⁻² at ω= 0 and of 200 »A mm⁻² at ω= 1500 rpm, corresponding to a current about 40 times higher than the one obtainable in an aqueous solution under the same conditions for both tests.

At T = 40°C, the O₂ reduction current was about 130 »A mm⁻² in the absence of stirring, and 250 »A mm⁻² at ω= 1500 rpm, corresponding to values which were 40 and 25 times, respectively higher than the ones obtained with an aqueous solution under the same conditions. It is possible to further enhance the current density in the ME by means of an intenser stirring: in fact, at ω= 3000 rpm, 300 »A mm⁻² were obtained.

At T = 60°C, 86 »A mm⁻² at ω= 0 and 260 »A mm⁻² at ω= 1500 rpm circulated in the ME, the value in the absence of stirring being three times the corresponding value in aqueous solution.

At 20°C and at ω= 1500 rpm, the circulation of 200 »A mm⁻² at a cathodic potential of -550 mV in the ME and at -850 mV in the aqueous solution was obtained; that means that, with the current density being the same, the electrolysis in microemulsion allows to save about 35% of the energy in W. In particular, the saving in this case was 0.06 mW of energy per mm⁻² of electrode surface as compared to the electrolysis in aqueous phase.

At ω= 1500 rpm and at 40°C, a circulation of 200 »A mm⁻² was observed at -450 mW instead of at -750 mV necessary in an aqueous solution, the energy saving being 0.06 mW/mm².

### EXAMPLE 2

Following the procedure described in the preceding example, a w/o ME was prepared which contained 32.42 g of PFPE with perfluoroalkyl end groups, belonging to class 1 and having an average molecular weight of about 800; 12 ml of bidistilled water; 47.88 g of ammonium salt of a monocarboxylic acid having a perfluoropolyether structure and belonging to class 1, exhibiting a narrow molecular weight distribution and an equivalent weight of 520; and 20.99 g of a monofunctional alcohol having a perfluoropolyether structure and an average molecular weight of 678. By mixing the components at room temperature, a single-phase, limpid and isotropic system having X = 2.99 millisiemens.cm⁻¹ and 10.6% of H₂O was obtained.

From the voltametric diagrams obtained in this case, the following current density values, due to O₂ reduction, were determined:
- at T = 20°C, 80 »A mm⁻² in the absence of stirring and 120 »A mm⁻² at ω= 1500 rpm, said values being 40 and 24 times, respectively higher than the ones obtained in aqueous solution;
- at T = 40°C, about 90 »A mm⁻² at ω= 0 and 185 »A mm⁻² at ω = 1500 rpm, the limiting current values being 30 and 19 times, respectively higher than the corresponding value in aqueous solution;
- at T = 60°C, about 75 »A mm⁻² at ω= 0 and 183 »A mm⁻² at ω = 1500 rpm, the value obtained without stirring being 2.5 times higher than the corresponding value obtained in aqueous solution.

A circulation of 200 »A mm⁻² with ω= 1500 rpm was observed:
- at 40°C at -680 mV in the ME as compared to -750 mV in aqueous solution, with an energy saving of 0.014 mW/mm²;
- at 60°C at -600 mV as compared to -750 mV in aqueous solution, corresponding to a saving of 0.03 mW/mm².

### EXAMPLE 3

A ME was prepared by mixing 55.59 g of a perfluoropolyether having perfluoroalkyl end groups and belonging to class 1, having an average molecular weight of 800, 4 ml of bidistilled water, 0.50 g of isopropyl alcohol and 29.75 g of ammonium salt of a monocarboxylic acid with perfluoropolyether structure having a narrow molecular weight distribution and a mean equivalent weight of 692.

The limpid and isotropic system contained 4.5% by weight of water and had a specific conductance of 3.72 millisiemens.cm⁻¹ and a pH of about 5.5.

From the voltametric diagrams the following current densities, due to O₂ reduction, were determined:
- at T = 20°C, 90 »A mm⁻² circulated without stirring and 126 »A mm⁻² at ω= 1500 rpm, said values being 40 and 25 times, respectively, higher than the ones obtained in aqueous solution under corresponding conditions;
- at T = 40°C, 75 »A mm⁻² circulated at ω= 0 and 200 »A mm⁻² at ω= 1500 rpm, said values being about 40 and 20 times, respectively, higher than the corresponding values obtained in aqueous solution;
- at T = 60°C, 120 »A mm⁻² circulated at ω= 0 and 215 »A mm⁻² at ω=1500 rpm; thus in the absence of stirring the four-fold of the current circulating in an aqueous electrolyte was obtained.

The circulation of 200 »A mm⁻² with ω= 1500 rpm was observed:
- at T = 40°C at -700 mV as compared to -750 mV in aqueous solution, with a saving of 0.01 mW/mm²;
- at T = 60°C at -600 mV as compared to -750 mV in aqueous solution, with a saving of 0.03 mW/mm².

### EXAMPLE 4

Prepared was a w/o ME containing 65.14 g of a PFPE having perfluoralkyl end groups, belonging to class 1 and having an average molecular weight of 800, 34.87 g of ammonium salt of the same acid as used in the preceding example, and 3 ml of water.

The system contained 3% of water and exhibited X = 1.9 millisiemens.cm⁻¹. From the voltametric diagrams obtained with this ME (saturated with moist O₂) the following was determined:
- at 20°C the O₂-reduction current density was 60 »A mm⁻² in the absence of stirring and 93 »A mm⁻² at ω= 1500 rpm;
- at 40°C there were obtained about 100 »A mm⁻² at ω= 0 and 165 »A mm⁻² at ω= 1500 rpm.

The same ME saturated with moist N₂ did not show, at room temperature, an appreciable current circulation at a cathodic potential lower than -850 mV; at an Ec higher than -850 mV, H₂ evolution was observed.

### EXAMPLE 5

To 40.5 ml of a perfluoropolyether having acid end groups, belonging to class 1, having an average equivalent weight of 2860 with respect to the acid groups and an average viscosimetric molecular weight of 2080, and consisting of a mixture of polymers having different molecular weights, neutralized with 13 ml of an ammonia solution (10% by weight of NH₃), there were added 20 ml of bidistilled water, 4.5 ml of a carboxylic acid having an equivalent weight of 668 and 18 ml of a carboxylic acid having an equivalent weight of 361, both carboxylic acids having a perfluoropolyether structure and belonging to class 1.

The resulting system consisted of a single limpid phase, which was stable in the temperature range of from 25 to 75°C and exhibited the following composition by weight:
- crude perfluoropolyether 49.8%
- aqueous phase 22.5%
- fluorinated surfactants 27.7%.

The microemulsion showed a conductance of 21 millisiemens.cm⁻¹ at a temperature of 25°C.
From the voltametric diagrams the following values of the current density of O₂-reduction were obtained:
- at 20°C about 55 »A mm⁻² at a working electrode rotational speed of zero, and 70 »A mm⁻² at ω= 1500 rpm, these values being by about 28 and 14 times higher than the corresponding ones obtained in aqueous solution;
- at 40°C, 90 »A mm⁻² at ω = 0 and 125 »A mm⁻² at ω= 1500 rpm circulated, these values being about 30 and 13 times, respectively, higher than the corresponding values obtained in aqueous solution.

In this case it was possible to obtain a current density of 100 »A mm⁻² at 20°C and at ω= 1500 rpm applying a cathodic potential of 700 mV in the ME and of 800 mV in the aqueous solution.

Thus, the ME made possible an energy saving of 0.01 mW/mm². At 40°C and at ω= 1500 rpm, a current density of 100 »A mm⁻² was obtained at -300 mV as compared to -600 mV necessary in aqueous solution, resulting in a saving of 0.033 mW/mm².

### EXAMPLE 6

To 40.5 ml of a perfluoropolyether having acid end groups, belonging to class 1, having an average equivalent weight of 2860 with respect to the acid groups and an average viscosimetric molecular weight of 2080, and being composed of a mixture of polymers having different molecular weights, neutralized with 13 ml of 2.5 M NaOH solution, there were added 20 ml of bidistilled water, 4.5 ml of a carboxylic acid having an equivalent weight of 668 and 18 ml of a carboxylic acid having an equivalent weight of 361, both of said acids having a perfluoropolyether structure and belonging to class 1.

The resulting system was composed only of a single limpid phase, which was stable in the temperature range from 25 to 75°C and had the following composition by weight:
- crude perfluoropolyether 49.8%
- aqueous phase 22.5%
- fluorinated surfactants 27.7%.

The microemulsion exhibited a conductance of 10.5 millisiemens.cm⁻¹ at a temperature of 25°C.

From the voltametric diagrams the following O₂-reduction current density values were determined:
- at T = 20°C: 38 »A mm⁻² without stirring and 65 »A mm⁻² at a working electrode rotational speed of 1500 rpm, these values being about 19 and 13 times, respectively, higher than the corresponding values obtained in aqueous solution;
- at T = 40°C: 105 »A mm⁻² in the absence of stirring and 123 »A mm⁻² at ω= 1500 rpm, these values being about 35 to 12 times, respectively, higher than the corresponding values obtained in an aqueous electrolyte;
- at T = 60°C: 75 »A mm⁻² without stirring and 135 »A mm⁻² at ω= 1500 rpm, the value at ω= 0 being by about 2.5 times higher than the corresponding value in aqeuous solution.

At 20°C and at ω= 1500 rpm there was obtained a circulation of 80 »A mm⁻² at a potential of -350 mV in ME as compared to -550 mV necessary in aqueous solution, the resulting energy saving being 0.016 mW/mm².

At 40°C, at ω= 1500 rpm, a circulation of 100 »A mm⁻² at a potential of -200 mV in the ME as compared to -650 mV necessary in aqueous solution, was obtained, the resulting energy saving being 0.045 mW/mm².

At 60°C 150 »A mm⁻² circulated at a potential of -300 mV in the ME as compared to -725 mV necessary with an aqueous electrolyte, the energy saving being higher than 0.06 mV/mm².

### EXAMPLE 7 (reference test)

A w/o ME consisting of 32.98 g of ammonium salt of the surfactant described in example 1, 58.96 g of a perfluoropolyether having perfluoroalkyl end groups, belonging to class 1 and having an average molecular weight of about 800, and 12 ml of water proved to be a limpid and isotropic system at 20°C and exhibited a specific conductance of 0.2 millisiemens.cm⁻¹.

No appreciable current circulation was observed when using this moist O₂-saturated ME as catholyte; from the current trend observed by increasing the applied cathodic potential no H₂ discharge potential could be determined; in any case a current density below 0.1 »A mm⁻² was obtained in the potential range from -100 mV to -190 mV.

The same ME, brought to 40°C, had X = 210 millisiemens.cm⁻¹ and permitted the circulation of about 40 »A mm⁻² at -800 mV.

### EXAMPLE 8

Conductive microemulsions based on perfluorocarbons. 1.26 g of a monocarboxylic acid having a perfluoropolyether structure belonging to class 1 and having a narrow molecular weight distribution and an equivalent weight of 520, allowed to solubilize 0.3 ml of an ammonia solution (10% by weight of NH₃) in 3.80 g of perfluorodecaline, in the presence of 0.39 g of isopropyl alcohol.

By mild magnetic stirring, a limpid and isotropic system was obtained at 20°C.

The w/o ME contained 5.2% by weight of microdispersed aqueous phase and exhibited a specific conductance of 1.35 millisiemens.cm⁻¹ and an acidic pH.

### EXAMPLE 9

4.04 of a monocarboxylic acid having a perfluoropolyether structure belonging to class 1, having an equivalent weight of 443 and a narrow molecular weight distribution, after having been salified with 1.35 g of an ammonia solution (10% by weight of NH₃), were solubilized in 10.27 g of perfluoroheptane. At 20°C a limpid and isotropic system having a specific conductance of 1.68 mS.cm⁻¹ and containing 8.15% of aqueous phase was obtained.

By adding water to the mixture thus obtained, the following conductance values were obtained, without macroscopic modifications of the ME:

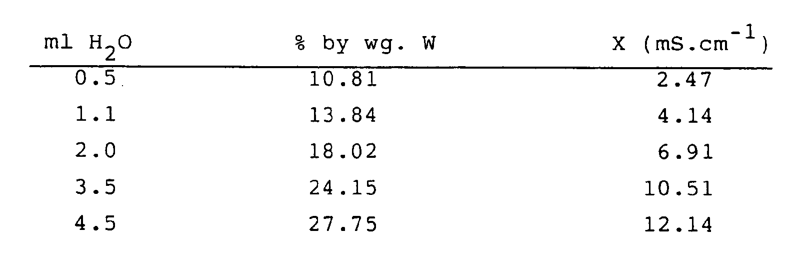

This system was capable of solubilizing, at room temperature, up to 28% of aqueous phase; at higher concentrations, separation into two phases was observed.

### EXAMPLE 10

2.02 g of the monocarboxylic acid having a perfluoropolyether structure as described in the preceding example, salified with 1 ml of ammonia solution (10% by weight of NH₃) allowed to solubilize 0.3 ml of bidistilled water in 3.40 g of perfluoroheptane, in the presence of 0.54 g of a perfluoropolyether alcohol having an average molecular weight equal to 678.

The w/o ME thus obtained contained 17.92% of aqueous phase and exhibited a specific conductance of 20.6 millisiemens.cm⁻¹ at 20°C.

The system was limpid and isotropic at temperatures lower than 27°C. When bringing the content of aqueous phase to 19.03%, by addition of 0.1 ml of water, a ME was obtained which exhibited X = 19.1 mS.cm⁻¹ at 20°C, but the stability range of the limpid and isotropic system was reduced to T≦21°C.

### EXAMPLE 11

Use of a perfluorocarbon-based ME as catholyte in the reduction of O₂.

By mixing, at room temperature, 29.25 g of a monocarboxylic acid having a perfluoropolyether structure belonging to class 1, having a narrow molecular weight distribution and an equivalent weight of 448, salified with 14.46 g of ammonia solution (10% by weight of NH₃), 2 ml of bidistilled water,52.07 g of perfluoroheptane and 8.60 g of a monofunctional alcohol having a perfluoropolyether structure and an average molecular weight of 678, there was obtained, under mild stirring, only one limpid and isotropic phase.

The ME thus prepared was indefinitely stable at 23°C and had a pH of 8.33 and a specific conductance of 44.31 millisiemens. cm⁻¹. The concentration of the aqueous phase was 15.47% by weight.

This ME was employed as catholyte in the previously described system, and the performance at 23°C was compared:
- in equilibrium with air
- under bubbling of moist N₂
- under bubbling of moist O₂.

From the voltametric diagrams, the limiting current values of O₂-reduction, measured at a cathodic potential of 200 mV, which is below the value at which H₂ evolution starts in the tested system,were determined.

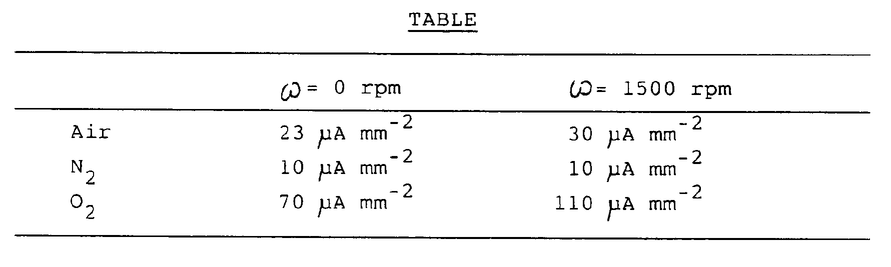

The small current circulating under N₂ bubbling may be due to incomplete O₂ removal.
The O₂-saturated ME, at ω= 1500 rpm, supported a O₂-reduction current density that was more than 20 times higher than the one which results from the same electrode reaction in aqueous solution.

The circulation of a current density of 100 »A mm⁻² at T = 23°C and ω= 1500 rpm was observed at a cathodic potential of -680 mV as compared to -800 mV necessary in aqueous solution; thus, an energy saving of 0.012 mW/mm² was obtained.

## Claims

1. Electrochemical process wherein a gaseous substance is reduced at a cathode and wherein microemulsions of the water-in-oil (w/o) type are utilized as catholytes, said microemulsions having an electric conductance by ion transfer of at least 1 millisiemens.cm⁻¹.

2. Process according to claim 1, wherein the gaseous matter is oxygen.

3. Process according to any one of claims 1 and 2, wherein the cathode is made of a metal generally utilized in voltametric processes.

4. Process according to claim 3, wherein the cathode is made of Au, Pt or Ni.

5. Process according to any one of claims 1 to 4, wherein the (w/o) microemulsions having a conductance of at least 1 millisiemens.cm⁻¹ are composed of a liquid, limpid or opalescent, macroscopically single-phased matter obtainable by mixing:
a) an aqueous liquid optionally containing one or more electrolytes;
b) a perfluoropolyether fluid having perfluoroalkyl and/or functional end groups, with carboxyl, alcohol, polyoxyalkylene-OH, ester, amide, etc. functionality, and preferably functional groups of the hydrophilic type;
c) a fluorinated surfactant preferably having a perfluoropolyether structure; and/or
d) a hydrogenated C₁₋₁₂ alcohol and, optionally, a (partially) fluorinated alcohol (co-surfactant).

6. Process according to claim 5, wherein the fluorinated surfactant is selected from one or more of the following salts:
a) salts of perfluoroalkylcarboxylic acids having 5 to 11 carbon atoms;
b) salts of perfluorosulphonic acids having 5 to 11 carbon atoms;
c) salts of mono- and di-carboxylic acids derived from perfluoropolyethers.

7. Process according to claim 5, wherein the fluorinated surfactant is of the non-ionic type substituted by a perfluoroalkyl chain and by a hydrophilic polyoxyalkylene cap.

8. Process according to any one of claims 1 to 7, wherein the oil is or comprises a perfluorocarbon.

9. Process according to any one of claims 1 to 7, wherein the oil is or comprises one or more perfluoropolyethers selected from:
a) PFPE having an average molecular weight of from 500 to 10,000 and preferably from 600 to 6,000, with perfluoroalkyl end groups, and belonging to one or more of the following classes:
1) 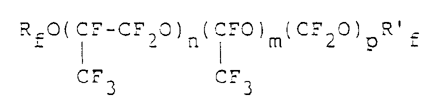 wherein the perfluorooxyalkylene units are distributed statistically and R_{f} and R′_{f}, the same or different form each other, are -CF₃, -C₂-F₅ or -C₃F₇, and m, n, p have such average values as to meet the above requirement as to average molecular weight;
2) R_{f}O(CF₂CF₂O)ₙ(CF₂O)ₘR′_{f}, wherein the perfluorooxyalkylene units are statistically distributed, R_{f} and R′_{f}, the same or different from each other, are -CF₃ or -C₂F₅, and m and n have such average values as to meet the above requirements as to average molecular weight;
3) 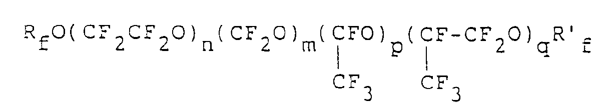 wherein the perfluorooxyalkylene units are statistically distributed, R_{f} and R′_{f}, the same or different from each other, are -CF₃, -C₂F₅ or -C₃-F₇, and m, n, p, q have such average values as to meet the above requirements as to average molecular weight;
4) 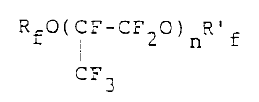 wherein R_{f} and R′_{f}, the same or different from each other, are C₂F₅ or C₃F₇ and n has such an average value as to meet the above requirement as to average molecular weight;
5) R_{f}O(CF₂CF₂O)ₙR′_{f}, wherein R_{f} and R′_{f}, the same or different from each other, are -CF₃ or -C₂F₅, and n has such an average value as to meet the above requirement as to average molecular weight;
6) R_{f}O(CF₂CF₂CF₂O)ₙR′_{f}, wherein R_{f} and R′_{f}, the same or different from each other, are -CF₃, -C₂F₅ or -C₃F₇ and n has such as average value as to meet the above requirement as to average molecular weight;
7) PFPE having the structure of class 1 or of class 3, wherein one of the end groups R_{f} or R′_{f} contains one or two chlorine atoms;
b) PFPE belonging to the above classes 1) to 7), and having an average molecular weight of from 1,500 to 10,000 but containing on the average from 0.1 to 4 non-perfluoroalkyl end groups per polymer chain;
c) PFPE having functional groups along the perfluoropolyether chain and end groups of the perfluoroalkyl or functional type.

## Patentansprüche

1. Elektrochemisches Verfahren, in dem eine gasförmige Substanz an einer Kathode reduziert wird und in dem Mikroemulsionen vom Wasser-in-Öl (W/O)-Typ als Katholyte eingesetzt werden, wobei die Mikroemulsionen eine elektrische Konduktanz durch Ionentransfer von mindestens 1 Millisiemens.cm⁻¹ aufweisen.

2. Verfahren nach Anspruch 1, in dem das gasförmige Material Sauerstoff ist.

3. Verfahren nach irgendeinem der Ansprüche 1 und 2, in dem die Kathode aus einem Metall hergestellt ist, das allgemein in voltametrischen Verfahren verwendet wird.

4. Verfahren nach Anspruch 3, in dem die Kathode aus Au, Pt oder Ni hergestellt ist.

5. Verfahren nach irgendeinem der Ansprüche 1 bis 4, in dem die (W/O)-Mikroemulsionen mit einer Konduktanz von mindestens 1 Millisiemens.cm⁻¹ aus einem flüssigen, klaren oder opaleszenten, makroskopisch einphasigen Material zusammengesetzt sind, das erhältlich ist durch Mischen:
a) einer gegebenenfalls einen oder mehrere Elektrolyte enthaltenden wäßrigen Flüssigkeit;
b) eines Perfluorpolyether-Fluids mit Perfluoralkyl- und/oder funktionellen Endgruppen, mit Carboxyl-, Alkohol-, Polyoxyalkylen-OH-, Ester-, Amid- usw. Funktionalität und vorzugsweise funktionellen Gruppen vom hydrophilen Typ;
c) eines fluorierten Tensids mit vorzugsweise Perfluorpolyether-Struktur; und/oder
d) eines hydrierten C₁₋₁₂-Alkohols und gegebenenfalls eines (teilweise) fluorierten Alkohols (Cotensid).

6. Verfahren nach Anspruch 5, in dem das fluorierte Tensid ausgewählt ist aus einem oder mehreren der folgenden Salze:
a) Salzen von Perfluoralkylcarbonsäuren mit 5 bis 11 Kohlenstoffatomen;
b) Salzen von Perfluorsulfonsäuren mit 5 bis 11 Kohlenstoffatomen;
c) Salzen von Mono- und Dicarbonsäuren, die von Perfluorpolyethern abgeleitet sind.

7. Verfahren nach Anspruch 5, in dem das fluorierte Tensid vom nicht-ionischen Typ, der durch eine Perfluoralkyl-Kette und durch eine hydrophile Polyoxyalkylen-Abschlußgruppe substituiert ist, ist.

8. Verfahren nach irgendeinem der Ansprüche 1 bis 7, in dem das Öl einen Perfluorkohlenstoff umfaßt oder daraus besteht.

9. Verfahren nach irgendeinem der Ansprüche 1 bis 7, in dem das Öl aus einem oder mehreren Perfluorpolyethern besteht oder diese umfaßt, die ausgewählt sind aus:
a) PFPE mit einem durchschnittlichen Molekulargewicht von 500 bis 10000 und vorzugsweise 600 bis 6000 und Perfluoralkyl-Endgruppen, zu einer oder mehreren der folgenden Klassen gehörend:
1) 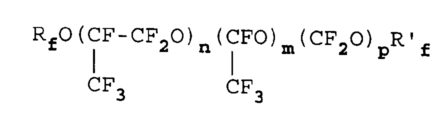 worin die Perfluoroxyalkylen-Einheiten statistisch verteilt sind und R_{f} und R′_{f}, gleich oder verschieden voneinander, -CF₃, -C₂F₅ oder -C₃F₇ sind und m, n, p solche Durchschnittswerte aufweisen, daß sie die obige Anforderung hinsichtlich des durchschnittlichen Molekulargewichts erfüllen;
2) R_{f}O(CF₂CF₂O)ₙ(CF₂O)ₘR′_{f′} worin die Perfluoroxyalkylen-Einheiten statistisch verteilt sind, R_{f} und R′_{f}, gleich oder verschieden voneinander, -CF₃ oder -C₂F₅ sind und m und n solche Durchschnittswerte aufweisen, daß sie die obigen Anforderungen hinsichtlich des durchschnittlichen Molekulargewichts erfüllen;
3) 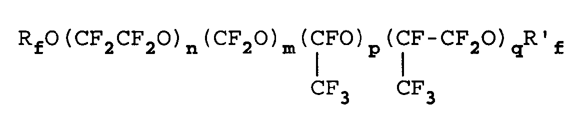 worin die Perfluoroxyalkylen-Einheiten statistisch verteilt sind, R_{f} und R′_{f}, gleich oder verschieden voneinander, -CF₃, -C₂F₅ oder -C₃F₇ sind und m, n, p, q solche Durchschnittswerte aufweisen, daß sie die obigen Anforderungen hinsichtlich des durchschnittlichen Molekulargewichts erfüllen;
4) 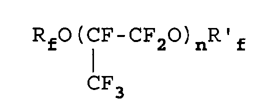 worin R_{f} und R′_{f}, gleich oder verschieden voneinander, C₂F₅ oder C₃F₇ sind und n einen solchen Durchschnittswert aufweist, das es die obige Anforderung hinsichtlich des durchschnittlichen Molekulargewichts erfüllt;
5) R_{f}O(CF₂CF₂O)ₙR′_{f}, worin R_{f} und R′_{f}, gleich oder verschieden voneinander, -CF₃ oder -C₂F₅ sind und n einen solchen Durchschnittswert aufweist, daß es die obige Anforderung hinsichtlich des durchschnittlichen Molekulargewichts erfüllt;
6) R_{f}O(CF₂CF₂CF₂O)ₙR′_{f}, worin R_{f} und R′_{f}, gleich oder verschieden voneinander, -CF₃, -C₂F₅ oder -C₃F₇ sind und n einen solchen Durchschnittswert aufweist, daß es die obige Anforderung hinsichtlich des durchschnittlichen Molekulargewichts erfüllt;
7) PFPE mit der Struktur von Klasse 1 oder Klasse 3, worin eine der Endgruppen R_{f} und R′_{f} ein oder zwei Chloratome enthält;
b) PFPE, der zu den obigen Klassen 1) bis 7) gehört und ein durchschnittliches Molekulargewicht von 1500 bis 10000 aufweist, aber im Durchschnitt 0,1 bis 4 Nicht-Perfluoralkyl-Endgruppen pro Polymerkette enthält;
c) PFPE mit funktionellen Gruppen entlang der Perfluorpolyether-Kette und Endgruppen vom Perfluoralkyl- oder funktionellen Typ.

## Revendications

1. Procédé électrochimique dans lequel on réduit une substance gazeuse à la cathode et dans lequel on utilise en tant que catholytes des micro-émulsions du type eau-dans-huile (w/o), lesdites micro-émulsions présentant une conductance électrique par transfert ionique d'au moins 1 millisiemens.cm⁻¹ et une teneur en eau de 10,6%.

2. Procédé selon la revendication 1, dans lequel la substance gazeuse est l'oxygène.

3. Procédé selon l'une quelconque des revendications 1 et 2, dans lequel la cathode est fabriquée en un métal généralement utilisé dans les procédés voltamétriques.

4. Procédé selon la revendication 3, dans lequel la cathode est en Au, Pt ou Ni.

5. Procédé selon l'une quelconque des revendications 1 à 4, dans lequel les micro-émulsions w/o ayant une conductance d'au moins 1 millisiemens par cm⁻¹ sont composées d'un liquide, limpide ou opalescent, uniphase macroscopiquement, obtenu par mélange de:
a) un liquide aqueux renfermant éventuellement un ou plusieurs électrolytes;
b) un fluide de perfluoropolyéther présentant des groupes terminaux perfluoroalkyles et/ou à fonctionnalité carboxyle, alcool, polyoxyalkylène-OH, ester, amide, etc, et de préférence des groupes fonctionnels de type hydrophile;
c) un agent tensioactif fluoré, de préférence présentant une structure perfluoropolyéther; et/ou
d) un alcool hydrocarboné en C₁ à C₁₂ et, le cas échéant, un alcool (partiellement) fluoré (co-surfactant).

6. Procédé selon la revendication 5, dans lequel l'agent tensioactif fluoré est choisi parmi un ou plusieurs des sels suivants:
a) sels d'acides perfluoroalkylcarboxyliques présentant 5 à 11 atomes de carbone;
b) sels d'acides perfluorosulfoniques présentant 5 à 11 atomes de carbone;
c) sels d'acides mono- et dicarboxyliques dérivés de perfluoropolyéthers.

7. Procédé selon la revendication 5, dans lequel l'agent tensioactif fluoré est du type non-ionique substitué par une chaîne perfluoroalkylique et par une extrémité hydrophile polyoxyalkylène.

8. Procédé selon l'une quelconque des revendications 1 à 7, dans lequel l'huile est ou renferme un perfluorocarbure.

9. Procédé selon l'une quelconque des revendications 1 à 7, dans lequel l'huile est ou renferme un ou plusieurs perfluoropolyéthers choisis parmi:
a) PFPE présentant un poids moléculaire moyen de 500 à 10 000 et de préférence de 600 à 6000, avec des groupes terminaux perfluoroalkyles et appartenant à une ou plusieurs des classes suivantes:
1) 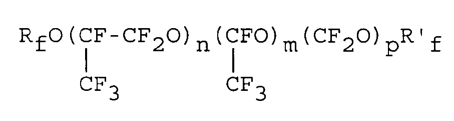 dans laquelle les unités perfluoro-oxyalkylènes sont distribuées statistiquement et R_{f} et R′_{f}, identiques ou différents l'un de l'autre, sont des groupes -CF₃, -C₂F₅ ou -C₃F₇, et m, n et p ont des valeurs moyennes telles que l'on respecte les exigences ci-dessus pour ce qui est du poids moléculaire moyen;
2) R_{f}O(CF₂CF₂O)ₙ(CF₂O)ₘR′_{f}, dans laquelle les unités perfluoro-oxyalkylènes sont distribuées statistiquement, R_{f} et R′_{f}, identiques ou différents l'un de l'autre, sont des groupes -CF₃ ou -C₂F₅ et m et n ont des valeurs moyennes telles que les exigences ci-dessus relatives au poids moléculaire moyen soient remplies;
3) 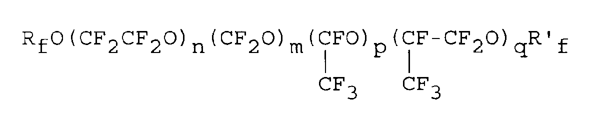 dans laquelle les unités perfluoro-oxyalkylènes sont distribuées statistiquement, R_{f} et R′_{f}, identiques ou différents l'un de l'autre, sont des groupes -CF₃, -C₂F₅ ou -C₃F₇, et m, n, p et q ont des valeurs moyennes telles que les exigences ci-dessus relatives au poids moléculaire moyen soient remplies;
4) 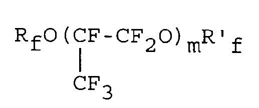 dans laquelle R_{f} et R′_{f}, identiques ou différents l'un de l'autre, sont des groupes -C₂F₅ ou -C₃F₇, et n a une valeur moyenne telle que les conditions ci-dessus relatives au poids moléculaire moyen;
5) R_{f}O(CF₂CF₂O)ₙR′_{f} dans laquelle R_{f} et R′_{f}, identiques ou différents l'un de l'autre, sont des groupes -CF₃ ou -C₂F₅, et n a une valeur moyenne telle que l'on satisfasse aux exigences ci-dessus relatives au poids moléculaire moyen;
6) R_{f}O(CF₂CF₂CF₂O)ₙR′_{f} dans laquelle R_{f} et R′_{f}, identiques ou différents l'un de l'autre, sont des groupes -CF₃, C₂F₅ ou -C₃F₇, et n a une valeur moyenne telle que l'on satisfasse aux exigences ci-dessus relatives au poids moléculaire moyen;
7) PFPE présentant la structure de la classe 1) ou de la classe 3, dans laquelle un des groupes terminaux R_{f} et R′_{f} comporte un ou deux atomes de chlore;
b) PFPE appartenant aux classes 1) à 7) ci-dessus et présentant un poids moléculaire moyen compris entre 1500 et 10 000, mais comportant en moyenne de 0,1 à 4 extrémités non-perfluoroalkyles par chaîne polymère:
c) PFPE présentant des groupes fonctionnels ainsi que des chaînes perfluoropolyéthers et des groupes terminaux du type perfluoroalkyle ou fonctionnel.
